# EUROPÄISCHE PATENTSCHRIFT

(11) **EP 0 561 107 B1**
(45) Veröffentlichungstag und Bekanntmachung des Hinweises auf die Patenterteilung: **02.11.1995**
(21) Anmeldenummer: 93100108.5
(22) Anmeldetag: 07.01.1993
(51) Int. Cl.: B64C 1/40, B64C 1/12, F16B 5/06

(54) **Halterung für eine Isoliermatte**
Fastener for an insulating layer
Support pour une couche isolante

(30) Priorität: 17.03.1992 DE 4208494
(43) Veröffentlichungstag der Anmeldung: 22.09.1993
(73) Patentinhaber: Daimler-Benz Aerospace Airbus Gesellschaft mit beschränkter Haftung, 21129 Hamburg (DE)
(72) Erfinder: Konzeczny, Manfred, W-2000 Hamburg 50 (DE); Tijssen, Hartmut, W-2161 Fredenbeck (DE)
(74) Vertreter: Hansmann, Dierk, Dipl.-Ing.

(56) Entgegenhaltungen:
- EP-A- 0 320 377
- FR-A- 1 362 078
- US-A- 4 840 333
- US-A- 5 031 268

## Beschreibung

Die Erfindung bezieht sich auf einen Halter zur Befestigung einer Isoliermatte zur Wärmedämmung an einer Flugzeugkabine, wobei der Halter an einem Stringer der Rumpfstruktur befestigt ist und einen mit der Isoliermatte verbindbaren Haltestift aufweist. Je Isoliermatte ist eine bestimmte Anzahl dieser Halter erforderlich.

Aus der EP 320 377 A1 ist ein Halter zur Befestigung einer Isoliermatte zur Wärmedämmung einer Flugzeugkabine bekannt, wobei der Halter an einem Stringer der Rumpfstruktur befestigt ist, einen mit der Isoliermatte verbindbaren Haltestift aufweist und aus Kunststoff hergestellt werden kann. Zum Befestigen des Halters weist dieser eine Kralle und einen Spreizstift derart auf, daß die Kralle die Bördelung des Stringers umgreifen und der Spreizstift in eine im Steg des Stringers befindliche Bohrung eingesetzt werden kann. Die besagten Bohrungen stellen eine Schwachstelle im Oberflächenschutz des Stringers dar und verursachen einen erheblichen Aufwand in der Herstellung der Flugzeugstruktur.

Die FR-A-1 362 078 zeigt einen anderen Halter zur Befestigung einer Isoliermatte zur Wärmedämmung einer Flugzeugkabine, wobei der Halter an einem Stringer der Rumpfstruktur befestigt ist, einen mit der Isoliermatte verbindbaren Haltestift aufweist und aus Kunststoff hergestellt werden kann. Zum Befestigen des Halters an einem Stringer weist dieser einen Fuß mit einem bogenförmigen Schlitz auf, der beim Ansetzen des Halters an den Stringer dessen Bördel aufnimmt. Zur Montage des Halters wird der Fuß mit dem Schlitz in Schräglage so an den Bördel des Stringers herangeführt, daß der Bördel bei einer Aufrichtung des Halters in den Schlitz eintreten kann. In aufrechter Lage des Halters wird dann ein Raststift in eine entsprechende Bohrung des Fußes eingedrückt, so daß der Fuß unter einer Vorspannung formschlüssig mit dem Stringer verbunden ist. Obwohl die Montage dieses Halters insofern vorteilhaft ist, als diese keine Bohrungen im Stringer erfordert, ist hierbei jedoch von Nachteil, daß er der der Halter aus mehreren einzelnen Teilen besteht, nämlich aus dem Fuß, dem Haltestift für die Isoliermatte und dem Raststift zur Sicherung des Fußes. Hierdurch gestaltet sich die Montage umständlich, wobei die Gefahr besteht, das wichtige Teile verlorengehen.

Demgemäß liegt der Erfindung die Aufgabe zugrunde, einen gattungsgemäßen Halter so auszubilden, daß zu dessen Befestigung keine Bohrungen im Steg des Stringers erforderlich sind und der Halter keine verlierbaren Einzelteile umfaßt.

Diese Aufgabe wird bei einem gattungsgemäßen Halter dadurch gelöst, daß dieser als auf den Stringer aufsetzbarer zweiteiliger Klipp ausgebildet ist, der ein Unterteil mit einer Mulde für den Stringer und ein als Schließteil ausgebildetes Oberteils umfaßt, wobei seitens des Unterteils ein Spreizstift und seitens des Oberteils eine auf dem Spreizstift verrastbare Aufnahme angeordnet ist, wobei ferner der Haltestift einstückig mit dem Unterteil verbunden ist und die Mulde aus einem bogenförmigen Bereich und einem ebenen Bereich besteht und das Oberteil aus einer Platte gebildet ist, die an ihrem in verrastetem Zustand dem Stringer zugewandten Ende in eine Rundung übergeht, die an der Innenseite der Bördelung anliegt, und an ihrem der Rundung abgewandten Ende eine angeformte Ausgleichsfeder zur Erzielung einer Klemmkraft zum Ausgleich unterschiedlicher Stringerdicken aufweist.

Dabei ist insbesondere von Vorteil, daß die bisherige Bohrung im Steg des Stringers entfällt, so daß der Montageaufwand deutlich reduziert wird.

Vorteilhafte Weiterbildungen der Erfindung sind in den Unteransprüchen angegeben.

Die Erfindung ist anhand der Zeichnung beispielhaft dargestellt und nachfolgend näher erläutert. Es zeigen
- Fig. 1: einen Kalter mit Ober- und Unterteil in montiertem Zustand,
- Fig. 2: eine Ansicht des Unterteils,
- Fig. 3: die Ansicht III des Unterteils nach Fig. 1,
- Fig. 4: eine Ansicht des Oberteils,
- Fig. 5: die Ansicht V des Oberteils nach Fig. 4,
- Fig. 6: die Ansicht VI des Oberteils nach Fig. 4,
- Fig. 7: einen Halter vor der Montage und
- Fig. 8: einen montierten Halter.

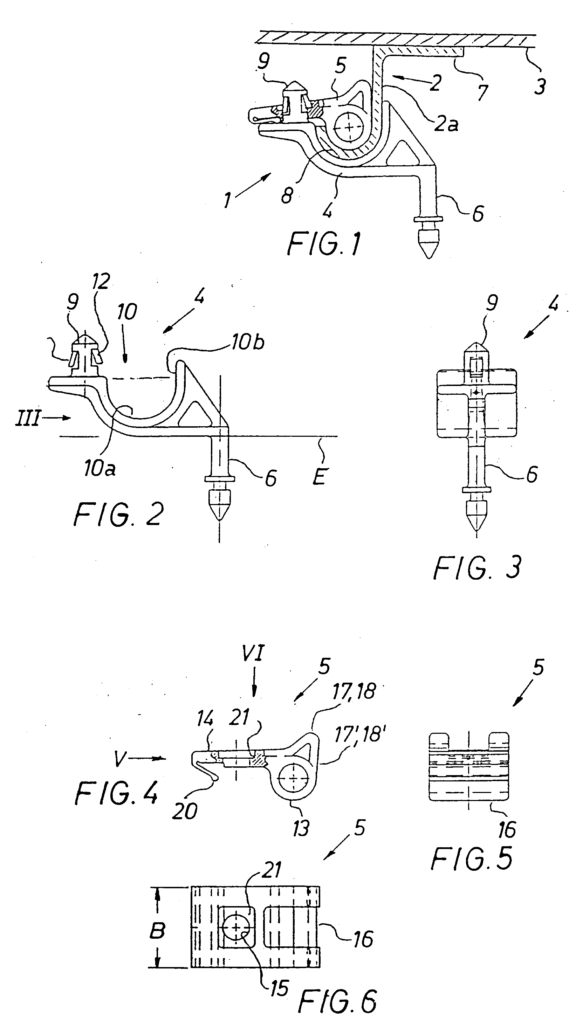

Figur 1 zeigt den Halter 1 in montiertem Zustand für eine nicht gezeigte Isoliermatte zur Wärmedämmung an einer Flugzeugkabine. Der aus thermoplastischem Kunststoff hergestellte Halter 1 ist an einem zur Rumpfstruktur gehörenden Stringer 2 durch Klemmung befestigt, wobei der Stringer 2 seinerseits mit der Außenhaut 3 des Flugzeugrumpfes verbunden ist. Zur Herstellung der Klemmung ist der Halter 1 als zweiteiliger Klipp ausgebildet, der aus einem Unterteil 4 und einem Oberteil 5 besteht, wobei der Haltestift 6 einstückig mit dem Unterteil 4 verbunden ist. Das Oberteil 5 ist als einrastbares Schließteil ausgebildet. Der Stringer 2 ist von Z-förmigem Querschnitt mit einem an der Außenhaut 3 befestigten Flansch 7, einem Steg 2a und einer kabinenseitigen Bördelung 8 von bogenförmigem Querschnitt. Zur Herstellung der Rastverbindung ist das Unterteil 4 mit einem Spreizstift 9 bekannter Art versehen, der beim Zusammenfügen von Unterteil 4 und Oberteil 5 in einer entsprechenden im Oberteil 5 angeordneten Aufnahme in Form einer Bohrung einrastet. Zur Befestigung einer Isoliermatte ist eine Vielzahl derartiger Halter erforderlich. Jede Isoliermatte weist Löcher auf, in denen sie auf die Haltestifte 6 aufgeschoben wird. Anschließend wird die Isoliermatte mittels nicht gezeigter elastischer Haltescheiben gesichert, die mit den Spitzen der Haltestifte 6 verrastbar sind.

Die Figuren 2 und 3 zeigen das Unterteil 4 des Halters 1 mit dem Haltestift 6 und dem Spreizstift 9. Das Unterteil 4 weist auf seiner der Außenhaut 3 zugewandten Seite eine Mulde 10 auf, deren Form der Außenkontur der Bördelung 8 des Stringers 2 angepaßt ist und demzufolge aus einem bogenförmigen Bereich 10a und einem ebenen Bereich 10b besteht. Der Spreizstift 9 weist zwei ungleiche widerhakenartige Spreizfedern 11 und 12 auf. Die Spreizfeder 11 ist von geringerer Wandstärke als die Feder 12 und reicht näher an den Fuß des Spreizstiftes 9 heran als diese. Das Unterteil 4 ist so ausgebildet, daß eine mit E bezeichnete Hauptebene bei sauber montiertem Halter 1 parallel zur hier nicht gezeigten Rumpfaußenhaut verläuft. Da der Haltestift 6 in montiertem Zustand annähernd senkrecht auf der Außenhaut stehen soll, steht dieser auch senkrecht auf der Hauptebene E.

Die Figuren 4 bis 6 zeigen das Oberteil 5 des Halters 1 mit einer Rundung 13, und einer Platte 14 mit einer Aufnahme 15. Dabei ergibt sich die Rundung 13 als Außenfläche eines Hohlzylinders 16, woran die Platte 14 annähernd tangential angeformt ist, wobei die Breite B der Platte 14 mit der Länge des Hohlzylinders 16 übereinstimmt. In Fig. 4 oberhalb des Hohlzylinders 16 sind zwei Klemmnasen 17 und 18 angeordnet, die jeweils mit der Rundung 13 eine ebene Fläche 17' bzw. 18' bilden, die tangential in die Rundung 13 übergeht. Am der Rundung 13 abgewandten Rand der Platte 14 ist eine Ausgleichsfeder 20 so angeformt, daß diese schräg nach unten zur Rundung 13 hin zeigt. Diese als Blattfeder ausgebildete Ausgleichsfeder 20 erstreckt sich über die gesamte Breite der Platte 14 und schließt mit dieser einen Winkel von ca. 30° ein. Auf der Oberseite der Platte 14 ist in der Umgebung der Aufnahme 15 eine Vertiefung 21 von rechteckigem Umriß angeordnet.

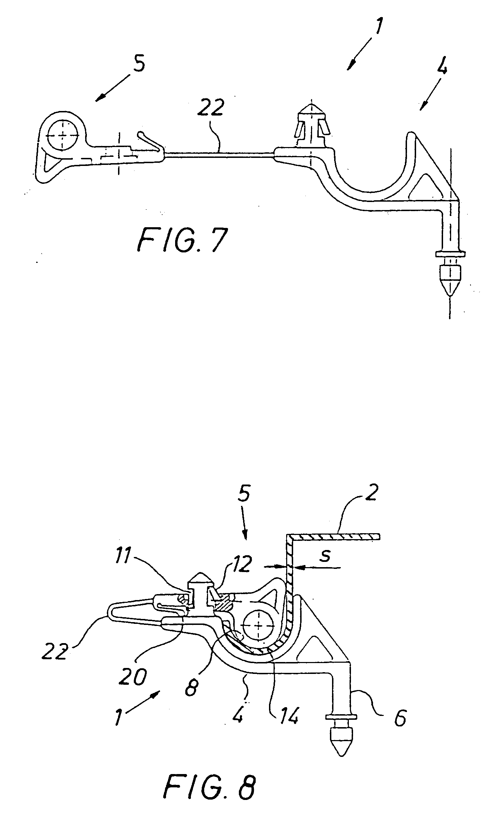

Fig. 7 zeigt eine Ausgestaltung der Erfindung, die darin besteht, daß das Unterteil 4 und das Oberteil 5 durch ein dünnes faden- oder bandförmiges Verbindungselement 22 miteinander verbunden sind. Hierdurch wird erreicht, daß bei der Montage zu jedem Unterteil 4 immer ein Oberteil 5 zur Hand ist.

Fig. 8 zeigt den Halter 1 nochmals in montiertem Zustand mit dem Stringer 2, dem Unterteil 4, dem Oberteil 5 und dem Haltestift 6. Das Unterteil 4 ist an den Stringer 2 angesetzt und das Oberteil 5 ist mit dem Unterteil 4 durch den Spreizstift 9 verbunden. Dabei liegt die Rundung 13 von innen an der Bördelung 8 an. Das freie Ende der Spreizfeder 12 stützt sich auf dem Grund der Vertiefung 21 ab und bewirkt so den Zusammenhalt von Unterteil 4 und Oberteil 5. Demgegenüber befindet sich das freie Ende der Spreizfeder 11 deutlich innerhalb der Aufnahme 15 und liegt somit an der Innenfläche der Aufnahme 15 unter einer Vorspannung an. Hierdurch wird sichergestellt, daß der Spreizstift 9 innerhalb der Aufnahme 15 in Richtung quer zum Stringer 2 einen spielfreien Sitz erhält. In montiertem Zustand ist, wie das Bild zeigt, die Ausgleichsfeder 20 angespannt und übt eine Druckkraft auf das Unterteil 4 aus. Hierdurch wirkt auf das Oberteil 5 ein um das freie Ende der Spreizfeder 12 drehendes Moment, so daß die Bördelung des Stringers 2 zwischen der Mulde 10 des Unterteils und der Rundung 13 des Oberteils eingeklemmt wird. Die Abmessungen der Ausgleichsfeder 20 sind so gewählt, daß sich auch im Falle unterschiedlicher Stringerdicken s stets eine hinreichend hohe Klemmkraft ergibt. Der hier gezeigte Stringer 2 ist im Vergleich mit dem Stringer nach Fig. 1 von geringerer Wandstärke. Das Oberteil 5 erscheint daher unter dem Einfluß der Ausgleichsfeder 20 um einen größeren Winkel geschwenkt als in Fig. 1. Das bandförmige Verbindungselement 22 weist in montiertem Zustand die gezeigte gebogene Form auf.

## Patentansprüche

1. Halter (1) zur Befestigung einer Isoliermatte zur Wärmedämmung einer Flugzeugkabine, wobei der Halter an einem Stringer (2) der Rumpfstruktur befestigt ist, wobei der Stringer einen z-förmigen Querschnitt mit einem strukturseitigen Flansch (7) und einer kabinenseitigen Bördelung (8) von bogenförmigem Querschnitt zeigt und der Halter einen mit der Isoliermatte verbindbaren Haltestift (6) aufweist,
dadurch **gekennzeichnet**, daß der Halter als auf den Stringer (2) aufsetzbarer zweiteiliger Klipp ausgebildet ist, der ein Unterteil mit einer Mulde (10) für den Stringer (2) und ein als Schließteil ausgebildetes Oberteils (5) umfaßt, wobei seitens des Unterteils (4) ein Spreizstift (9) und seitens des Oberteils (5) eine auf dem Spreizstift (9) verrastbare Aufnahme (15) angeordnet ist, wobei ferner der Haltestift (6) einstückig mit dem Unterteil (4) verbunden ist und die Mulde (10) aus einem bogenförmigen Bereich (10a) und einem ebenen Bereich (10b) besteht und das Oberteil (5) aus einer Platte (14) gebildet ist, die an ihrem in verrastetem Zustand dem Stringer (2) zugewandten Ende in eine Rundung (13) übergeht, die an der Innenseite der Bördelung (8) anliegt, und an ihrem der Rundung (13) abgewandten Ende eine angeformte Ausgleichsfeder (20) zur Erzielung einer Klemmkraft zum Ausgleich unterschiedlicher Stringerdicken aufweist.

2. Halter nach Anspruch 1,
dadurch **gekennzeichnet**, daß der Spreizstift (9) zwei widerhakenartige Spreizfedern (11) und (12) von unterschiedlicher Länge aufweist.

3. Kalter nach Anspruch 1 oder 2,
dadurch **gekennzeichnet**, daß das freie Ende der längeren Spreizfeder (11) in montiertem Zustand innerhalb der Aufnahme (15) liegt.

4. Halter nach einem der Ansprüche 1 bis 3,
dadurch **gekennzeichnet**, daß das freie Ende der kürzeren Spreizfeder (12) in montiertem Zustand außerhalb der Aufnahme (15) liegt.

5. Halter nach einem der Ansprüche 1 bis 4,
dadurch **gekennzeichnet**, daß auf der Oberseite der Platte (14) in der Umgebung der Aufnahme (15) eine Vertiefung (21) von rechteckigem Umriß angeordnet ist.

6. Halter nach einem der Ansprüche 1 bis 5,
dadurch **gekennzeichnet**, daß das Unterteil (4) und das Oberteil (5) durch ein dünnes faden- oder bandförmiges Verbindungselement (22) miteinander verbunden sind.

## Claims

1. Holder (1) for fastening an insulating mat for heat insulation of an aircraft cabin, the holder being fastened to a stringer (2) of the fuselage structure, the stringer being Z-shaped in cross-section with a structure-side flange (7) and a cabin-side edging (8), which is arc-shaped in cross-section, and the holder having a retention pin (6) which is connectable to the insulating mat,
characterized in that the holder takes the form of a two-piece clip which may be mounted onto the stringer (2) and comprises a bottom part with a trough (10) for the stringer (10) and a top part (5) in the form of a closure part, an expanding pin (9) being disposed on the side of the bottom part (4) and a receiver (15) latchable on the expanding pin (9) being disposed on the side of the top part (5), furthermore the retention pin (6) being integrally connected to the bottom part (4) and the trough (10) comprising an arc-shaped region (10a) and a flat region (10b) and the top part (5) being formed by a plate (14), which at its end facing the stringer (2) in the latched state verges into a rounded portion (13), which lies against the inside of the edging (8), and at its end remote from the rounded portion (13) has a compensating spring (20) formed thereon for achieving a clamping force to compensate different stringer thicknesses.

2. Holder according to claim 1,
characterized in that the expanding pin (9) has two barblike expanding springs (11) and (12) of differing length.

3. Holder according to claim 1 or 2,
characterized in that the free end of the longer expanding spring (11) in the assembled state lies inside the receiver (15).

4. Holder according to one of claims 1 to 3,
characterized in that the free end of the shorter expanding spring (12) in the assembled state lies outside of the receiver (15).

5. Holder according to one of claims 1 to 4,
characterized in that a recess (21) having a rectangular contour is disposed at the top of the plate (14) in the vicinity of the receiver (15).

6. Holder according to one of claims 1 to 5,
characterized in that the bottom part (4) and the top part (5) are connected to one another by a thin, thread- or tape-like connection element (22).

## Revendications

1. Support (1) destiné à la fixation d'un matelas isolant destiné à isoler une cabine d'un avion contre les effets de la chaleur, ledit support étant fixé sur un raidisseur (2) du fuselage, ce raidisseur présentant une section transversale en forme de Z pourvue d'une bride (7) côté structure et d'une collerette (8) de section transversale en forme d'arc de cercle côté cabine, alors que le support présente une cheville d'arrêt (6) pouvant être reliée au matelas isolant, **caractérisé en ce que** le support est conçu comme une pince en deux parties pouvant être montée sur le raidisseur (2), cette pince comprenant une partie inférieure pourvue d'une cavité (10) pour le raidisseur (2) et une partie supérieure (5) conçue comme un élément de fermeture, une cheville à écartement (9) étant disposée à côté de la partie inférieure (4) et un logement (15) encliquetable sur la cheville à écartement (9) étant disposé à côté de la partie supérieure (5), la cheville d'arrêt (6) étant en outre solidaire de la partie inférieure (4) et la cavité (10) se composant d'une zone (10a) en forme d'arc de cercle et d'une zone (10b) plate, alors que la partie supérieure (5) est composée d'une plaque (14) dont l'extrémité tournée vers le raidisseur s'engrène, à l'état verrouillé, dans une courbure (13), laquelle repose sur la face interne de la collerette (8), et dont l'extrémité opposée à la courbure (13) présente un ressort compensateur (20) destiné à fournir une force de serrage dont le but est de compenser les différences d'épaisseur du raidisseur.

2. Support selon la revendication 1, caractérisé en ce que la cheville à écartement (9) présente deux ressorts d'écartement (11) et (12) de type barbelé de longueur différente.

3. Support selon l'une ou l'autre des revendications 1 et 2, caractérisé en ce que l'extrémité libre du ressort d'écartement (11) le plus long repose à l'état monté à l'intérieur du logement (15).

4. Support selon l'une ou l'autre des revendications 1 à 3, caractérisé en ce que l'extrémité libre du ressort d'écartement (12) le plus court repose à l'état monté à l'extérieur du logement (15).

5. Support selon l'une ou l'autre des revendications 1 à 4, caractérisé en ce que sur la face supérieure de la plaque (14) autour du logement (15) est prévu un évidement (21) de profil rectangulaire.

6. Support selon l'une ou l'autre des revendications 1 à 5, caractérisé en ce que la partie inférieure (4) et la partie supérieure (5) sont reliées l'une à l'autre par un fin élément de liaison (22) en forme de fil ou de ruban.
